# EUROPEAN PATENT APPLICATION

(11) **EP 4 056 274 A1**
(43) Date of publication of application: **14.09.2022**
(21) Application number: 22153573.5
(22) Date of filing: 27.01.2022
(51) Int. Cl.: B01L 3/00

(54) **STRUCTURES FOR SUPPORTING THE FILLING OF WELLS IN MICROFLUIDIC DEVICES**

(30) Priority: 11.03.2021 LU 102655
(71) Applicant: Stratec Consumables GmbH, 5081 Anif (AT)
(72) Inventor: Reiter, Gottfried, 5421 Adnet (AT); Hanner, Thomas, 5020 Salzburg (AT)
(74) Representative: Tegethoff, Sebastian

(57) **Abstract**

The invention relates to structures for supporting the filling of wells, in particular in microfluidic devices and provides a microfluidic device, comprising a substrate with at least a first horizontal channel which continues as a first vertical chimney channel into a first well having a greater depth than the first horizontal channel with respect to an upper surface of the substrate, wherein the first vertical channel is half open to the volume of the first well. A method for filling a well of a microfluidic device using the device is also an object of the disclosure.

## Description

### Field of the Invention

The invention relates to structures for supporting the filling of wells, in particular in microfluidic devices.

### Brief description of the related art

Microfluidic devices for use in clinical diagnostics and life sciences are produced by a number of companies. For example, STRATEC^{®} Consumables GmbH, Anif, Austria, produces a number of devices for specimen handling and detection for use in automated analyser systems and other laboratory instrumentation.

STRATEC^{®} Consumables GmbH manufactures microfluidic devices which comprise structures like channels for allowing liquid flow, chambers for receiving and storing liquids, valves for controlling the liquid flow and sensors for measuring and controlling a liquid flow. Microfluidic devices are used, and the structures are chosen to perform biochemical assays using small volumes of liquids so that numerous assays can be performed in parallel on a single microfluidic device which are also designated as a chip.

The use of structures with very small volumes for processing liquids in a small scale are related to rheological problems regarding the liquid transfer due to the interaction of the liquid with the surfaces or the material of the respective structures.

Published U.S. Patent Application No. US 2019/0217298 A1 discloses a centrifugal microfluidic device having a sample distribution structure and a centrifugal microfluidic system including the centrifugal microfluidic device. The centrifugal microfluidic device includes: a rotatable platform; a sample chamber which is disposed in the rotatable platform and houses a fluid sample; a distribution channel connected to an outlet of the sample chamber; a valve which is disposed in the outlet of the sample chamber; a plurality of non-vented reaction chambers which are disposed in the rotatable platform outside of the distribution channel in the radial direction; and a plurality of inlet channels connecting the distribution channel with the reaction chambers.

Published International Patent Application No. WO 2019/143440 A1 relates to a microfluidic device with a microfluidic circuit including an array of fluidly coupled microchambers. Each microchamber includes a reaction chamber and an associated vent chamber. The microfluidic circuit may be arranged so that a fluid sample introduced to microfluidic device flows into the reaction chamber and air or other gas present in the reaction chamber is vented from the microchamber through the vent chamber. The microchamber may be configured to allow only the flow of air into the vent chamber from the reaction chamber until the air has been displaced from the reaction chamber by the fluid sample and/or a predefined volume of the fluid sample has been received in the reaction chamber. The microchamber may be further configured to release the fluid sample to thereafter flow from the reaction chamber into the vent chamber.

US 2019/0217298 A1 as well as WO 2019/143440 A1 respectively, are based on a contact angle >90°C of a fluid on a substrate, because the surface tension of the fluid retains the wetting. The chimney serves as a vent channel and pressure must be actively applied, because the surface tension of the fluid is greater than the surface energy of the substrate.

Published European patent Application EP 2 436 446 A1 discloses a multi-chamber plate preferably for analytical purposes, the multi-chamber plate has a plurality of chambers and a channel system for filling the chambers with at least one sample fluid. The multi-chamber plate has a proximal end and a distal end. A radial direction is defined from the proximal end to the distal end. A centrifugal force is applicable parallel to the radial direction. The channel system comprises at least one application site for applying the sample fluid to the channel system. The chambers each have at least one inlet opening and at least one outlet opening being separate from the inlet opening. Both the inlet opening, and the outlet opening are positioned on a proximal side of the chambers. The chambers are fillable through the inlet openings with the sample fluid driven by the centrifugal force. The chambers are vented through the outlet openings. At least one reagent is in the chambers. The channel system has at least one main feeding line and has at least one main venting line. The inlet openings are connected to the main feeding line at inlet channel junctions and the outlet openings are connected to the main venting line at outlet channel junctions. The inlet channel junctions are located further towards the distal end than the respective outlet channel junctions. The inlet openings, the outlet openings, the inlet channel junctions and the outlet channel junctions are arranged such that, during the filling with the sample fluid, a venting of each chamber is possible until the respective chamber is completely filled with the sample fluid. Described layouts provide controlled, complete filling of the chambers while strongly reducing the risk of cross-contamination of reagents, contained in the chambers, and trapping of gas bubbles in the chambers, wherein sharp corners or edges shall be avoided to prevent air-bubble trapping.

Published U.S. Patent Application UD 2005/249641 A1 describes a micro-structured platform for manipulating a wetting liquid including at least one cavity and a channel system for transporting the liquid. At least some of the channels of the channel system are made as capillaries which have a dimension in the millimetre range or less in at least one direction transverse to the transport direction of the liquid. The platform also includes at least one other micro-structured element disposed in the transport path of the liquid. The micro-structured element may be in the form of a fluidic switch, metering means, separating device, or a region for holding together a limited amount of liquid. The structure facilitates or enables the manipulation of liquids when only a small amount of liquid is available and extensive analyses are to be performed with the liquid. It is disadvantages that the channel end directly in the chambers so that air-bubbles may be trapped when a liquid enters a chamber.

Published U.S. Patent Application US teaches a microfluidic device may include a sample distribution network including a plurality of sample chambers configured to be loaded with biological sample for biological testing of the biological sample while in the sample chambers, the biological sample having a meniscus that moves within the sample chambers during loading. The sample distribution network may further include a plurality of inlet channels, each inlet channel being in flow communication with and configured to flow biological sample to a respective sample chamber, and a plurality of outlet channels, each outlet channel being in flow communication and configured to flow biological sample from a respective sample chamber. At least some of the sample chambers may include a physical modification configured to control the movement of the meniscus so as to control bubble formation within the at least some sample chambers. At least some of the sample chambers may include a dried reagent positioned within the at least some sample chambers proximate the inlet channels in flow communication with the at least some sample chambers.

Disadvantages of the available solutions are related to an uncontrolled air entrapment. They are not suitable for surfaces with a contact angle below 90° and require the application of pressure. In order to avoid the occurrence of air bubbles or the enclosure of air, an increased effort is required like a precise adjustment of contact angles to the respective geometry or the application of additional materials.

### Object of the Invention

It is therefore the object of this invention to provide a device and a method for filling wells or chambers of said device avoiding entrapped air.

### Summary of the Invention

The present invention provides a microfluidic device, comprising a substrate with at least a first horizontal channel which continues as a first vertical chimney channel branching off with a sharp corner excluding the presence of a tapered region, rounded edges or conically shaped outlet openings into a first well having a greater depth than the first horizontal channel with respect to an upper surface of the substrate, wherein the first substantially vertical channel is half open to the volume of the first well and is connected to the volume of the first well without being part of the volume of the first well.

In a further aspect of a microfluidic device according to the present invention, a second horizontal channel extends from the first well.

In a further embodiment of the device of the present invention, a second horizontal channel extends from the first well and branches off with a sharp corner excluding the presence of a tapered region, rounded edges or conically shaped outlet openings into a second vertical chimney channel into a second well having a greater depth than the second horizontal channel with respect to an upper surface of the substrate, wherein the second substantially vertical chimney channel is half open to the volume of the second well and is connected to the volume of the second well without being part of the volume of the second well.

It is also envisaged that channel and wall surfaces have a smaller contact angel, preferably below 90° than a lid which has a greater contact angle in comparison to said channels and surfaces.

It is intended that the contact angle between a liquid and the surfaces of the channels and well is less than 90°.

In another aspect of the present invention, the surfaces of the channels and well are coated with silicon oxide.

Another object of the present invention relates to a method for filling a well of a microfluidic device, comprising the steps of:
- filling with a liquid at least a first horizontal channel arranged in a substrate which is a part of the microfluidic device,
- filling with the liquid a first vertically arranged chimney channel which branches off with a sharp corner excluding the presence of a tapered region, rounded edges or conically shaped outlet openings from the at least first substantially horizontally arranged channel into a first well, wherein said first well has a greater depth than the first horizontally arranged channel with respect to an upper surface of the substrate, and wherein said first vertically arranged chimney channel is half open to the volume of the first well and is connected to the volume of the first well without being part of the volume of the first well;
- wetting a bottom of said first well;
- filling the volume of said first well.

In another aspect of the invention, the method may comprise the step of filling a second horizontal channel which extends from an upper end of said first well.

It is further intended that the step of filling a vertical chimney channel which branches off with a sharp corner excluding the presence of a tapered region, rounded edges or conically shaped outlet openings from the second horizontal channel into a second well having a greater depth than the second horizontal channel with respect to an upper surface of the substrate, wherein the second vertical chimney channel is half open to the volume of the second well and is connected to the volume of the second well without being part of the volume of the second well.

In a further embodiment of the method according to the present invention, the contact angle between the liquid and the surfaces of the channels and well shall be less than 90°.

Another object of the present invention relates to a method for manufacturing a microfluidic device, comprising the step of providing an injection mould for a substrate which is part of a microfluidic device for forming at least a first horizontal channel which branches off with a sharp corner excluding tapered regions, rounded edges or conically shaped outlet openings as a first substantially vertical chimney channel into a first well having a greater depth than the first substantially horizontal channel with respect to an upper surface of the substrate, wherein the first substantially vertical channel is half open to the volume of the first well and is connected to the volume of the first well without being part of the volume of the first well.

The present invention also relates to a use of a microfluid device as described above for filling wells with a liquid.

Still other aspects, features, and advantages of the present invention are readily apparent from the following detailed description, simply by illustrating preferable embodiments and implementations. The present invention is also capable of other and different embodiments and its several details can be modified in various obvious respects, all without departing from the spirit and scope of the present invention. Accordingly, the drawings and descriptions are to be regarded as illustrative in nature, and not as restrictive. Additional objects and advantages of the invention will be set forth in part in the description which follows and in part will be obvious from the description, or may be learned by practice of the invention.

### Summary of the Figures

The invention will be described based on figures. It will be understood that the embodiments and aspects of the invention described in the figures are only examples and do not limit the protective scope of the claims in any way. The invention is defined by the claims and their equivalents. It will be understood that features of one aspect or embodiment of the invention can be combined with a feature of a different aspect or aspects of other embodiments of the invention, in which:
FIG. 1 shows schematically the filling of a well with a liquid.
FIG. 2 shows schematically how a liquid which is dispensed into a well is filling a channel.
FIG. 3 shows a sectional view through different well geometries.
FIG. 4 shows two neighbouring wells connected by a channel.
FIG. 5 shows different perspective views on a round well with a chimney channel and a first horizontally arranged channel.
FIG. 6 shows different perspective views on a squared well with rounded corners with a chimney channel and a first horizontally arranged channel.

### Detailed Description of the Invention and the Figures

The technical problem is solved by the independent claims. The dependent claims cover further specific embodiments of the invention.

The present disclosure relates to a device, like a microfluidic device, having surfaces with a contact angle smaller than 90° for allowing capillary filling with liquids in said microfluidic devices. With respect to the devices known from the prior art, it is to be noted that a well and lid of such devices with surfaces with a contact angle below 90°, would result in a large entrapment of air.

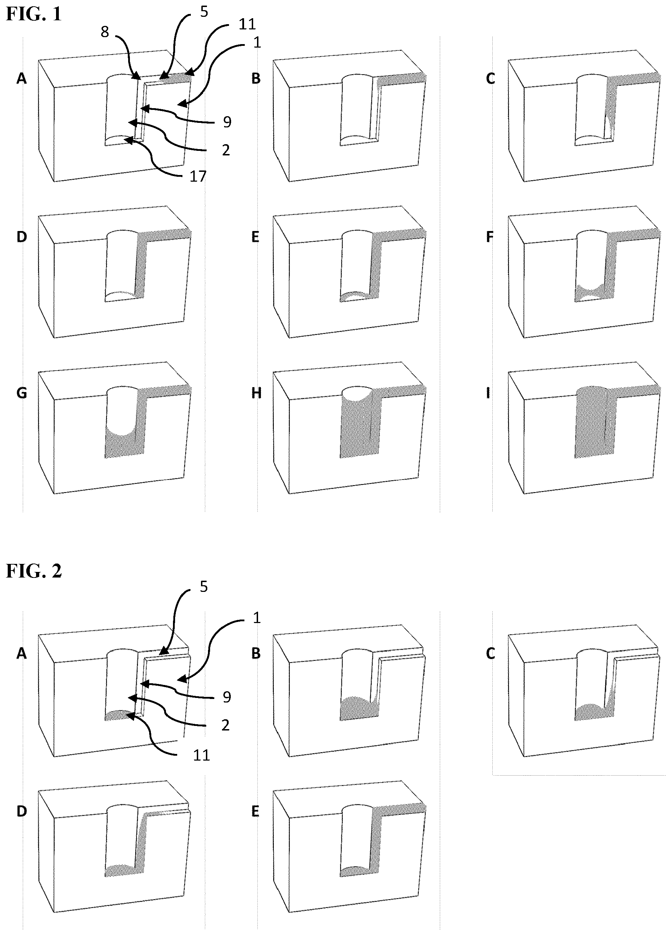

The geometry of wells according to the present disclosure differs specifically in having channel surfaces with a contact angle below 90° and a filling direction through a so-called chimney channel from a chimney side or via a guide channel as shown in FIG. 1. In addition, the geometry is adapted by the contact angles of the side walls and bottoms of a well or chamber so that they have a lower contact angle than the lids.

The term sharp corner refers within the meaning of the present invention to a transition area between two microfluidic formations like two channels which does not comprise any tapered regions, rounded edges or conically shaped outlet openings. The two microfluidic channels of a device according to the present inventio transit into another into a pointed angle comprising an angle of about 90°.

A particular feature of the present invention is the presence of a semi-open channel (also referred to as chimney channel or guide channel) which directs the fluid to the bottom of the well, from where the wetting of the well starts and is thus filled from the bottom to the top without air entrapment. It is to be noted that the vertical chimney channel is not part of a well's volume although it is at the side opposite to the side where the horizontal chanter continues into the vertical channel completely open towards the well's volume. A vertical chimney channel is an additional microfluidic formation which has a smaller diameter than the well to which it is attached on one side.

The present disclosure refers basically to a microfluidic device or system comprising channels with at least two different depths, wherein the channel with the smaller depth continues into an area having a greater depth forming a well or chamber. The channel continues as a half-open, vertically arranged channel downwards to the bottom of the well. The capillary effect fills the closed and the half-open channel of a well until the bottom of the well is wetted. Then, with suitable geometries, the well fills from the bottom to the top, allowing air to escape through a continuing channel. The contact angle between liquid and substrate has to be less than 90° (or significantly smaller), as can be achieved for aqueous solutions, for example, by coating the channels with SiOₓ, adding surfactants or mixing with polar, organic solvents such as ethanol.

It is intended that the side walls and the bottoms of wells have a lower contact angle than the lid, so that the liquid has a low contact angle to this surface and the lids have a higher contact angle that is above the contact angle of the channel and well surfaces including a well's bottom surface, so that the liquid has a high contact angle to this surface. Without limiting the present disclosure, the contact angle of the surfaces of channel and well may be below 90°, whereas the contact angle of a lid is greater than 90°.

The microfluidic device comprises at least one substrate which has an upper and a lower surface. An extending first recess in preferably arranged in an upper surface with a rectangular or rounded shape and can be regarded as a first channel with a defined depth. The first recess extends in a longitudinal direction with respect to the flat upper or lower surface. Said first channel continues in a transition area into a deeper depth but is no longer a substantially horizontally extending recess but a more or less vertically extending channel which is at least partially open to the volume of a well or a chamber. Thus, a well or a chamber has a greater depth than the first channel and a cylindrical or cubical geometry and extends on one vertical side into the open vertical extension from the first channel with the smaller depth. This part of a well or chamber is also referred to as a chimney channel which causes the technical effect that a liquid enters a well through the chimney channel to the bottom of the well or chamber so that well or chamber will be filled from the bottom to the top (comp. FIG. 1).

If a liquid is dispensed into a well or chamber, the liquid may rise through the chimney channel upwards to reach the first channel with the smaller depth extending substantially horizontally in the preferably upper surface of a substrate and move through capillary forces through the first channel (comp. FIG.2).

If the surfaces of a microfluidic device's channels and well have a small contact angle and the lid has a contact angle which corresponds to the contact angle of channels and well, the liquid can move along the edges of channels, well and lid of the microfluidic device due to a capillary effect (so-called shooter). Different contact angles between the surfaces of the channels and well on one hand and the lid on the other hand may weaken said capillary effect. Should the liquid reach the opposite channel before the well is completely filled, the opposite channel would fill and trap air in the well. There is therefore a relationship between the contact angle of the lid, the diameter of the well, the well volume and the chimney channel geometry: the well must be filled faster than the liquid can reach the channel on the other side. This can be achieved on the fabrication side.

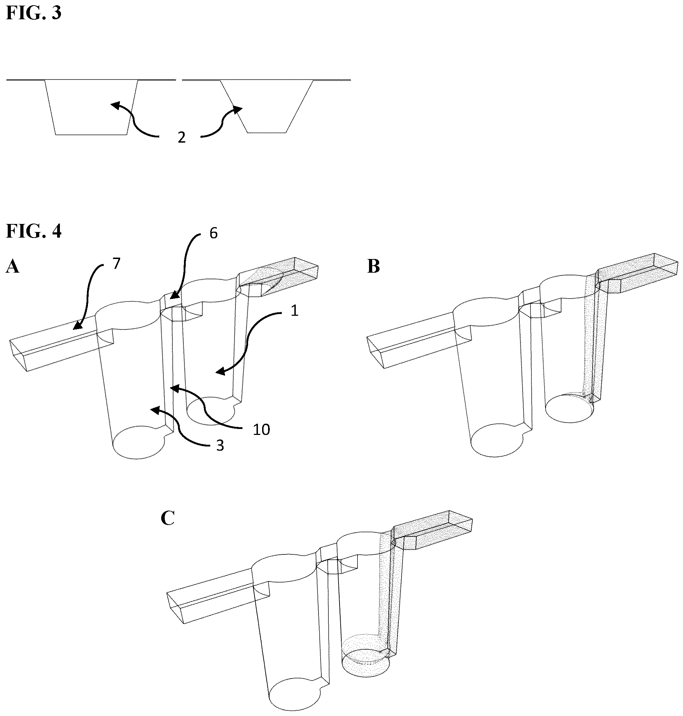

The shooter may be prevented by one or a combination of the following:
- a lid with higher contact angle than the chip (e.g. glass-coated chip and PDMS film).
- a larger angle between chip and lid slows down the shooter. The well 2 in FIG. 3 on the left has a larger angle between the upper surface of the substrate and lid compared to the well on the right and thus slows down a shooter. The larger the angle, the slower the shooter and the smaller the angle, the faster the shooter.
- unchanged or reduced well volume with larger diameter (depth, draft angle).
- narrower chimney (faster wetting of the well bottom due to higher capillary forces)

Basically, Jurin's law must be observed. Jurin's law describes the interaction of capillary and gravitational force.

Another parameter that influences the filling speed is therefore the weight of the liquid column in the well. This weight force counteracts the capillary force (channel above the well). This means that in a worst-case scenario, the capillary force is no longer able to push the liquid upwards in the well, and the filling will stop.

By inserting more corners further capillary forces are created in these corners, which also counteract the weight force and thus accelerate the filling process. It is preferred to have a rectangular shape instead of round wells, because too many small corners are not related to any advantage either (number of corners towards infinity is again a circle). Thus, there is an ideal value for the number of corners depending on the geometry and corners should not be introduced according to the rule "the more the better".

Another possibility to accelerate the filling process is to turn the arrangement upside down, i.e. channel down and well up, i.e. "overhead". In this arrangement, the weight of the liquid in the well supports the filling process, but the liquid in the capillary/chimney channel must rise upwards, i.e. against the weight force. This is less critical due to the small diameter of the chimney channel and the resulting smaller mass compared to the mass in the well. However, the well must be so small/narrow that the liquid does not drip down onto the lid.

Furthermore, an influence by the fluid is of course also possible. The present points apply to homogeneous fluids, for inhomogeneous fluids where there is a low viscosity or well wetting component (for example solvents) can have strongly pronounced shooters and thus greatly complicate the estimation of the appropriate geometry and coating.

Advantages of the invention can be summarized as
- Filling of deep structures without air entrapment;
- Only two layers necessary (well suited for common mass production processes);
- No additional material;
- Suitable for coatings and surfaces with a contact angle below 90°

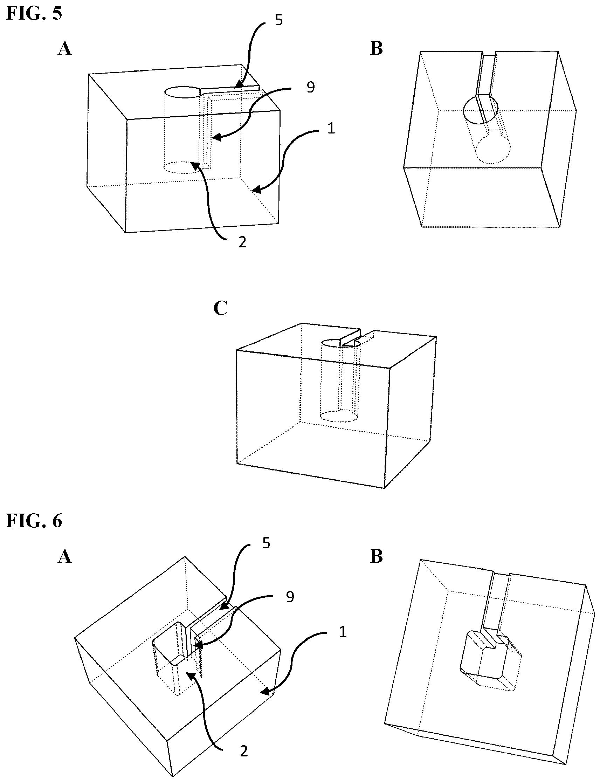

Alternative approaches to realize or to circumvent the invention relate to
- Round well would be standard (FIG. 5)
- Square well with rounded corners, edges (FIG. 6)
- Angular well, then half-open channel connects to one of the bottom corners
- Multiple channels in one well for large wells
- using surfaces with low contact angles e.g. by plasma treatment, SiOx coating, electrolytes etc. for aqueous solutions
- using surfaces with a greater contact angle than 90° e.g. for organic solvents
- Vacuum on output side, pressure on input side can support
- Substrate can consist of all common materials or a combination of them (as long as the contact angle will be below 90°): thermoplastics, glass, silicones, ceramics, metal
- Other forms of a conductive structure than a simple channel would be conceivable, e.g. paper or a structure that acts like a capillary pump (both, however, more difficult to implement for the current processes).

FIG. 1 shows schematically in a sequence the filling of a first well 2 through a first channel 5. A substrate 1 has a first channel 5 which extends in the upper surface of the substrate 1. At a sharp corner transition area 8, the first channel 5 which is substantially extending horizontally, continues vertically into the substrate and form a first chimney channel 9 which is at least partially open towards the first well 2.

A liquid 11 moves through capillary forces along the first channel 5 (FIG. 1A) and follows than the first chimney channel 9 (FIG. 1B, C) to reach the bottom 17 of the first well 2 (FIG. ID) before filling the volume of the first well. Following wetting of the bottom 17 of the first well 2 (FIG. IE), the volume of the first well 2 is filled with the liquid 11 (FIG. 1F-I).

FIG. 2 shows schematically in a sequence the filling of a first channel 5 from a first well 2 which are both located in a substrate 1. As already described above, that the microfluidic device according to the present disclosure may also be used as a reservoir for continuously supplying a liquid 11. The liquid 11 is dispensed into a first well 2 (FIG. 2A). Via the capillary effect of the half-open first chimney channel 9, a steady flow will result from the reservoir into the first horizontal channel 5, independent from the filling level of the reservoir, as long as the maximum depth (counterforce = gravity) is not undercut (FIG. 2B-E). It is obvious that the supply of a dispensed liquid will also be possible in a second or further wells having the above described components.

FIG. 4 shows a first well 2 and a neighboring second wells 3 which are connected by a channel which can be regarded as a second channel 6 leading to the second well 3 with a second chimney channel 10. A third channel 7 may guide a liquid to other structures of the microfluidic device, which may also be a third well.

FIG. 5 and FIG. 6 show different perspective views on geometries of a first well 2. In FIG. 5A-C a rounded first well 5 located in a substrate 1 is shown with a respective first chimney channel 9 which is half open towards the first well 2 and which is a continuation of the first channel 5. FIG. 6A, B show a rectangular first or second well 2, 3 with rounded corners.

The different depths between a first or second channel 5, 6 and a first or second well 2, 3 in a substrate 1 can also be taken from FIG. 5 and FIG. 6.

The foregoing description of the preferred embodiment of the invention has been presented for purposes of illustration and description. It is not intended to be exhaustive or to limit the invention to the precise form disclosed, and modifications and variations are possible in light of the above teachings or may be acquired from practice of the invention. The embodiment was chosen and described in order to explain the principles of the invention and its practical application to enable one skilled in the art to utilize the invention in various embodiments as are suited to the particular use contemplated. It is intended that the scope of the invention be defined by the claims appended hereto, and their equivalents. The entirety of each of the aforementioned documents is incorporated by reference herein.

### Reference Numerals

- 1: substrate
- 2: first well
- 3: second well
- 5: first channel
- 6: second channel
- 7: third channel
- 8: sharp corner transition area
- 9: first chimney channel
- 10: second chimney channel
- 11: liquid
- 17: bottom of well

## Claims

1. A microfluidic device, comprising a substrate with at least a first horizontal channel which continues as a first vertical chimney channel branching off with a sharp corner excluding the presence of a tapered region, rounded edges or conically shaped outlet openings into a first well having a greater depth than the first horizontal channel with respect to an upper surface of the substrate, wherein the first substantially vertical channel is half open to the volume of the first well and is connected to the volume of the first well without being part of the volume of the first well.

2. The device of claim 1, wherein a second horizontal channel extends from an upper end of said first well.

3. The device of claim 2, wherein a second horizontal channel extends from the first well and branches off with a sharp corner excluding the presence of a tapered region, rounded edges or conically shaped outlet openings into a second vertical chimney channel into a second well having a greater depth than the second horizontal channel with respect to an upper surface of the substrate, wherein the second substantially vertical chimney channel is half open to the volume of the second well and is connected to the volume of the second well without being part of the volume of the second well.

4. The device of claim 1 or 2, wherein channel and well surfaces have a contact angle below 90°.

5. The device of any one of claims 1 to 3, wherein a lid has a contact angle that is greater than the contact angle of the channel well surfaces.

6. The device of any one of claims 1 to 4, wherein the contact angle between a liquid and the surfaces of the channels and well is less than 90°.

7. The device of any one of claims 1 to 5, wherein the surfaces of the channels and well are coated with silicon oxide.

8. A method for filling a well of a microfluidic device, comprising the steps of:
- filling with a liquid at least a first horizontal channel arranged in a substrate which is a part of the microfluidic device,
- filling with the liquid a first vertically arranged chimney channel which branches off with a sharp corner excluding the presence of a tapered region, rounded edges or conically shaped outlet openings from the at least first horizontally arranged channel into a first well, wherein said first well has a greater depth than the first horizontally arranged channel with respect to an upper surface of the substrate, and wherein said first vertically arranged chimney channel is half open to the volume of the first well and is connected to the volume of the first well without being part of the volume of the first well;
- wetting a bottom of said first well;
- filling the volume of said first well.

9. The method of claim 8, comprising the step of filling a second horizontal channel which extends from an upper end of said first well.

10. The method of claim 9, comprising the step of filling a vertical chimney channel which branches off with a sharp corner excluding the presence of a tapered region, rounded edges or conically shaped outlet openings from the second horizontal channel into a second well having a greater depth than the second horizontal channel with respect to an upper surface of the substrate, wherein the second vertical chimney channel is half open to the volume of the second well and is connected to the volume of the second well without being part of the volume of the second well.

11. The method of any one of claims 8 to 10, wherein the contact angle between the liquid and the surfaces of the channels and well is less than 90°.

12. A method for manufacturing a microfluidic device, comprising the step of providing an injection mould for a substrate which is part of a microfluidic device for forming at least a first horizontal channel which branches off with a sharp corner excluding tapered regions, rounded edges or conically shaped outlet openings as a first vertical chimney channel into a first well having a greater depth than the first horizontal channel with respect to an upper surface of the substrate, wherein the first vertical channel is half open to the volume of the first well and is connected to the volume of the first well without being part of the volume of the first well.

13. The use of a microfluid device of any one of claims 1 to 7 for filling wells with a liquid.
